# EUROPEAN PATENT APPLICATION

(11) **EP 2 236 390 A1**
(43) Date of publication of application: **06.10.2010**
(21) Application number: 10157825.0
(22) Date of filing: 25.03.2010
(51) Int. Cl.: B62B 3/00, H04N 13/00, G02B 27/22

(54) **Cart for 3D glasses**

(30) Priority: 30.03.2009 US 164781 P
(71) Applicant: X6D Limited, Pasadena CA California 91105 (US)
(72) Inventor: Carlow, Richard A., South Pasadena, California 91030 (US); Chen, Eugenia J., Arcadia, California 91007 (US); Chen, Michael J., Tustin, California 92782 (US); Cruz, Brandon L., Anaheim, California 92807 (US); Garfio, Alejandro, West Covina, California 91762 (US); Mondragon, Diner, Rocky Face, GA 30740 (US)
(74) Representative: Lockey, Robert Alexander

(57) **Abstract**

A cart for holding 3D glasses, comprising drawers and bins, doors and a roll up door, a top cover, and cushioning material in the drawers and bins comprising an anti-static material.

## Description

### 1. CROSS REFERENCE TO RELATED APPLICATIONS

This application claims the benefit of the filing date of U.S. provisional patent application serial no. 61/164,781, filed on 3/30/2009, the disclosure of which is incorporated herein by reference.

### 2. BACKGROUND

This disclosure relates to carts for holding glasses for viewing 3D images.

### BRIEF DESCRIPTION OF THE DRAWINGS

Fig. 1 is a front perspective view of an exemplary embodiment of a cart for holding 3D glasses.

Fig. 2 is a rear perspective view of the cart for holding 3D glasses of Fig. 1.

Fig. 3 is a front view of the cart for holding 3D glasses of Fig. 1.

Fig. 4 is a top view of the cart for holding 3D glasses of Fig. 1.

Fig. 5 is a front perspective view of the cart for holding 3D glasses of Fig. 1 showing various open compartments.

Fig. 6 is an exploded view of the front of the cart for holding 3D glasses of Fig. 1.

Fig. 7 is a front view of a portion of the cart for holding 3D glasses of Fig. 1.

Fig. 8 is a front view of the cart for holding 3D glasses of Fig. 1 showing various open compartments.

Fig. 9 is a top view of the cart for holding 3D glasses of Fig. 5 showing various open compartments.

Fig. 10 is an end view of the cart for holding 3D glasses of Fig. 1 showing various open compartments.

Fig. 11 is a fragmentary cross sectional view of a storage bin of the cart for holding 3D glasses of Fig. 1.

Fig. 12 is a fragmentary cross sectional view of the cart for holding 3D glasses of Fig. 5.

Fig. 13 is a top view of a drawer of the cart for holding 3D glasses of Fig. 1.

Fig. 14a is a front view of the cart for holding 3D glasses of Fig. 1 showing various open compartments.

Fig. 14b is a top view of the drawer of the cart for holding 3D glasses of Fig. 14a.

Fig. 14c is a fragmentary cross sectional view of the drawer of the cart for holding 3D glasses of Fig. 14b.

### DETAILED DESCRIPTION

In the drawings and description that follows, like parts are marked throughout the specification and drawings with the same reference numerals, respectively. The drawings are not necessarily to scale. Certain features of the invention may be shown exaggerated in scale or in somewhat schematic form and some details of conventional elements may not be shown in the interest of clarity and conciseness. The present invention is susceptible to embodiments of different forms. Specific embodiments are described in detail and are shown in the drawings, with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce desired results. The various characteristics mentioned above, as well as other features and characteristics described in more detail below, will be readily apparent to those skilled in the art upon reading the following detailed description of the embodiments, and by referring to the accompanying drawings.

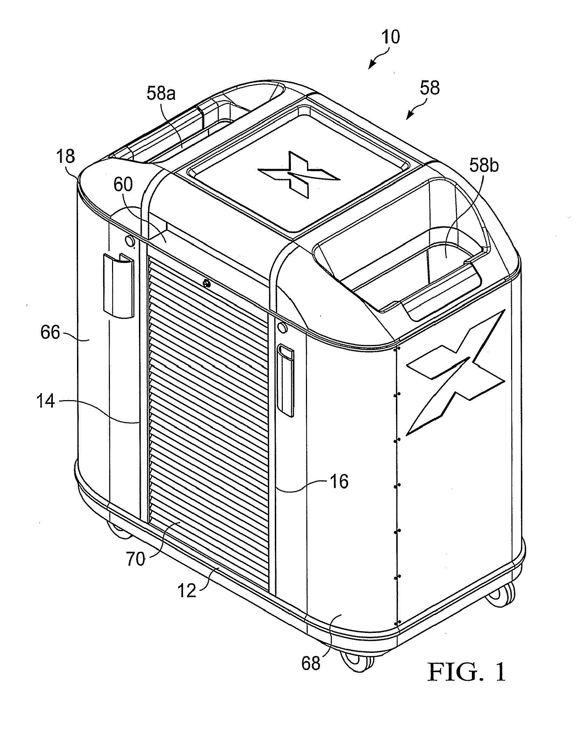

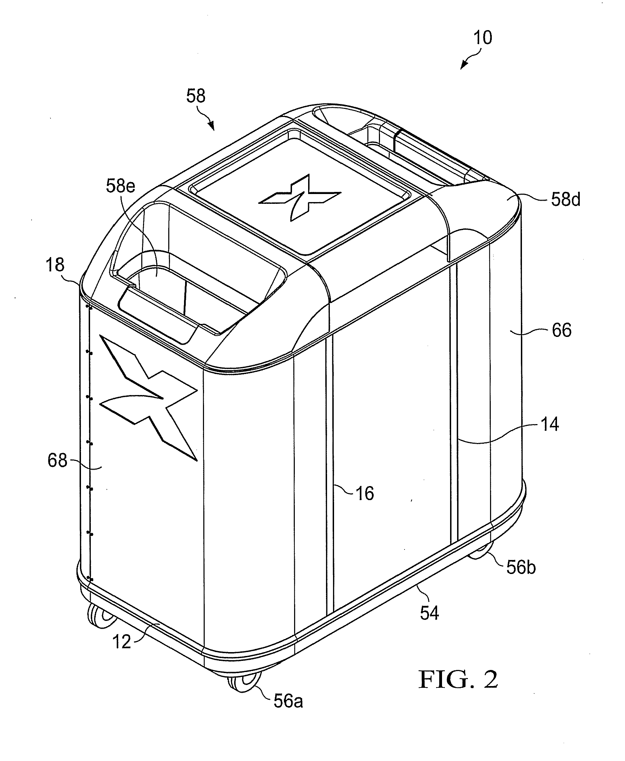

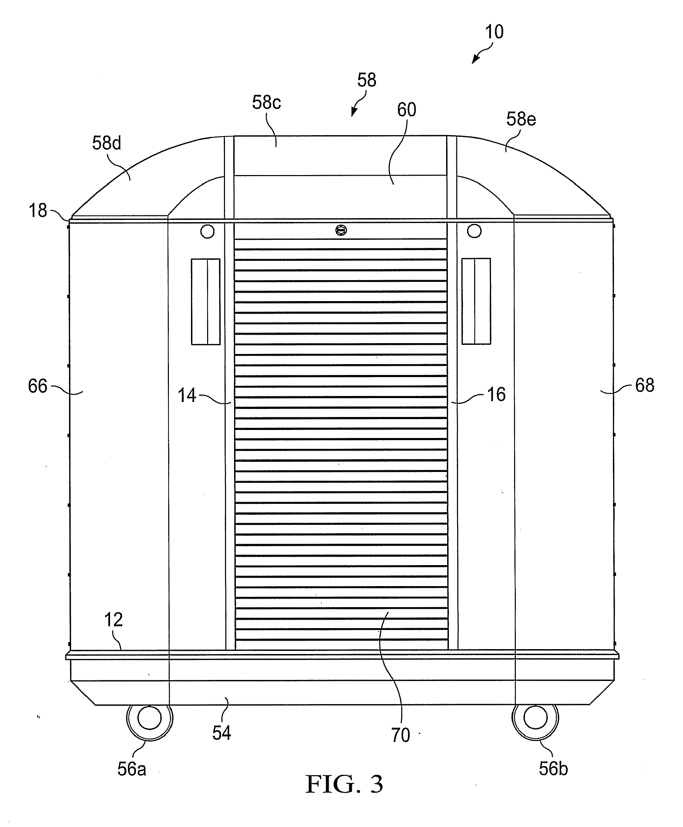

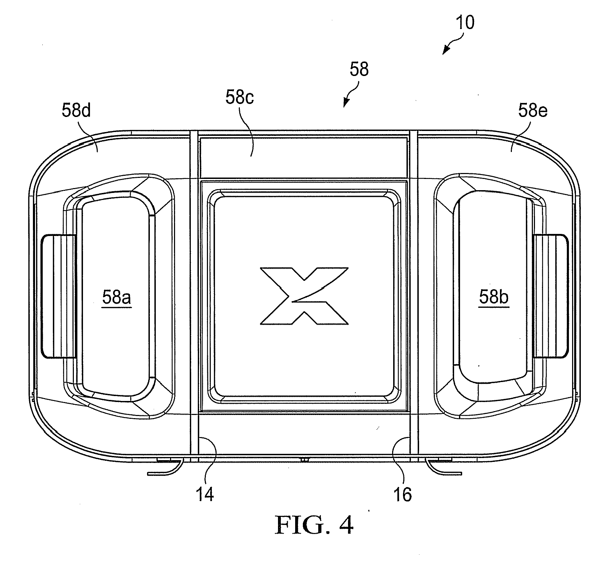

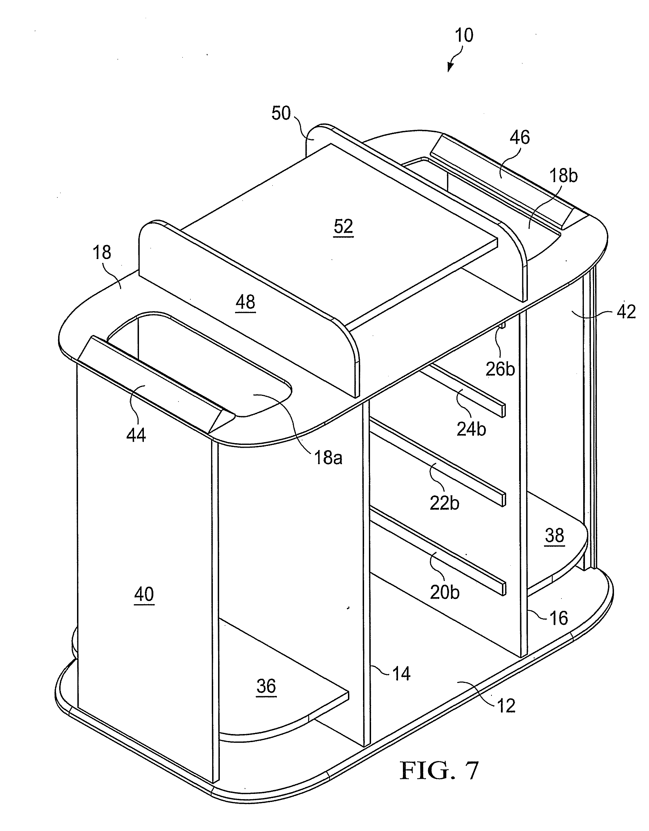

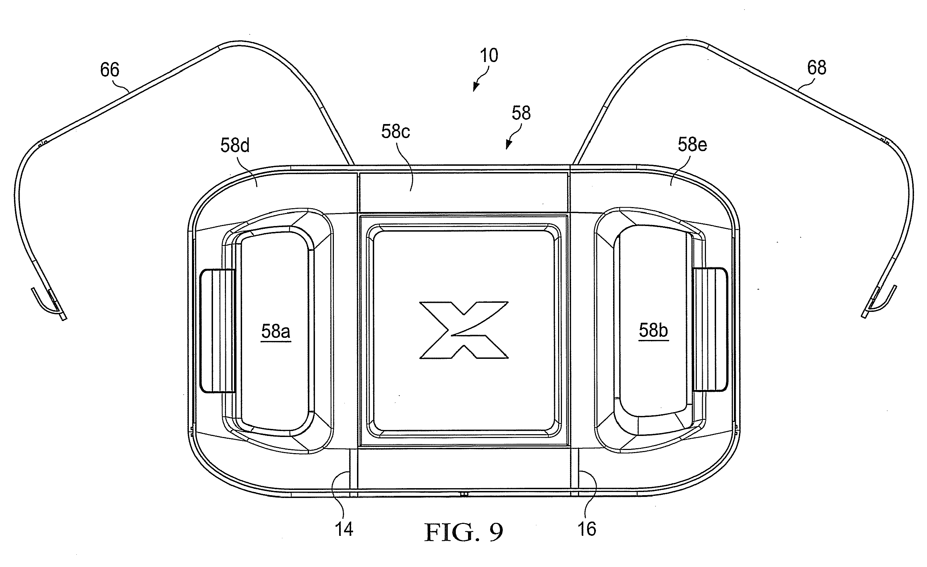

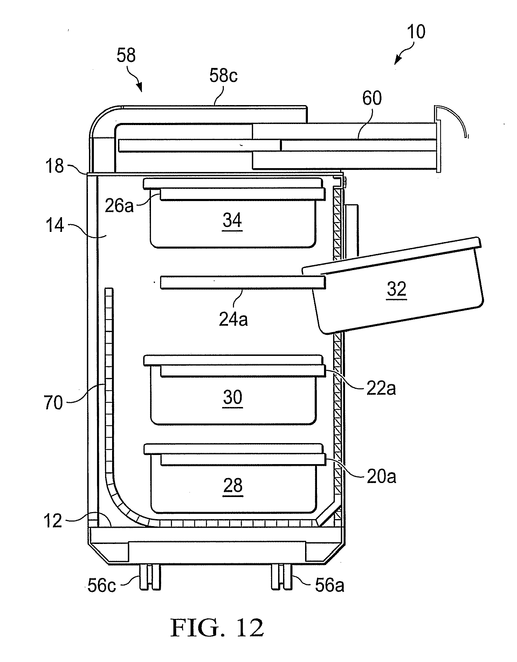

Referring to Figs. 1-14c, an exemplary embodiment of a cart 10 for 3D glasses includes a horizontal base panel 12 having an upper surface that is coupled to lower ends of spaced apart vertical panels, 14 and 16, and the upper ends of the vertical panels are coupled to a lower surface of a horizontal support panel 18 that defines spaced apart left and right openings, 18a and 18b. Spaced apart sets of horizontal supports, 20a and 20b, 22a and 22b, 24a and 24b, and 26a and 26b are coupled in opposing relation on the opposing interior side faces of the vertical panels, 14 and 16, for slidably supporting corresponding drawers, 28, 30, 32, and 34, respectively.

Interior flat end faces of left and right horizontal shelves, 36 and 38, are coupled to and extend from the exterior side faces of the vertical panels, 14 and 16, respectively. Lower ends of left and right vertical panels, 40 and 42, are coupled to opposite outer ends of the upper surface of the horizontal base panel 12 and upper ends of the left and right vertical panels are coupled to opposite outer ends of the lower surface of the horizontal support panel 18. The exterior end faces of the left and right horizontal shelves, 36 and 38, are coupled to and extend from the interior side faces of the left and right vertical panels, 40 and 42, respectively.

Left and right handle supports, 44 and 46, are coupled to opposite outer ends of the upper surface of the horizontal support panel 18 and lower ends of spaced apart vertical supports, 48 and 50, are coupled to the upper surface of the horizontal support panel. Ends of a horizontal panel 52 are coupled to interior side faces of the vertical supports, 48 and 50. An upper surface of a cart base 54 is coupled to a lower surface of the horizontal base panel 12 and a plurality of cart wheels 56a, 56b, 56c and 56d are coupled to the lower surface of the cart base proximate the four corners of the cart base.

A collection bin top 58 defines left and right openings, 58a and 58b, and includes a central horizontal support 58c that forms a bridge between left and right end portions, 58d and 58e, of the collection bin top. The lower surfaces of the left and right end portions, 58d and 58e, of the collection bin top 58 are coupled to the opposing upper surfaces of the horizontal support panel 18 and the left and right openings, 58a and 58b, are positioned above the left and right openings, 18a and 18b, respectively, of the horizontal support panel.

A drawer 60 is slidably coupled to the spaced apart vertical supports, 48 and 50, within a chamber defined between the vertical supports, the horizontal panel 52 and the horizontal support 58c of the collection bin top 58. Removable left and right bins, 62 and 64, are supported on the left and right horizontal shelves, 36 and 38, respectively, within chambers defined between the left and right horizontal shelves, the vertical panels, 14 and 16, the vertical panels, 40 and 42, and the horizontal support panel 18.

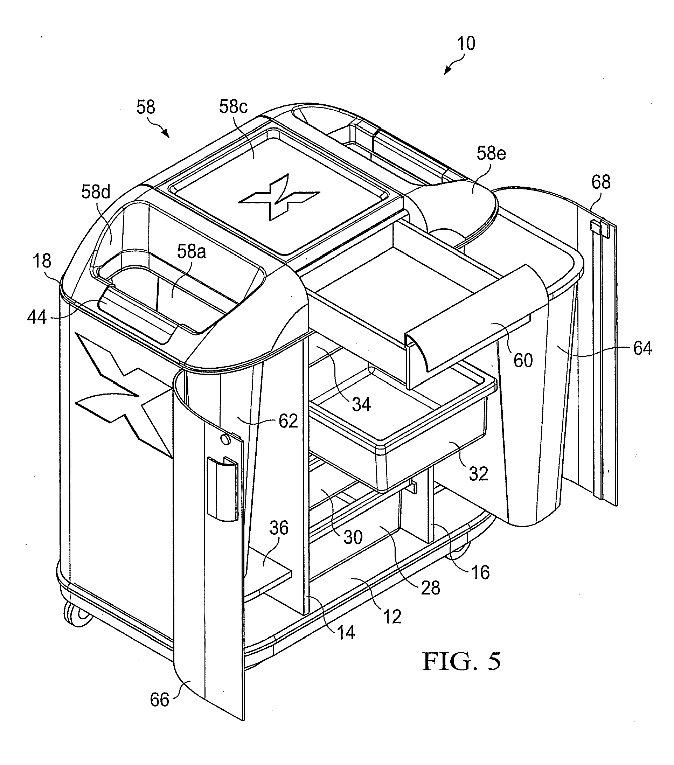

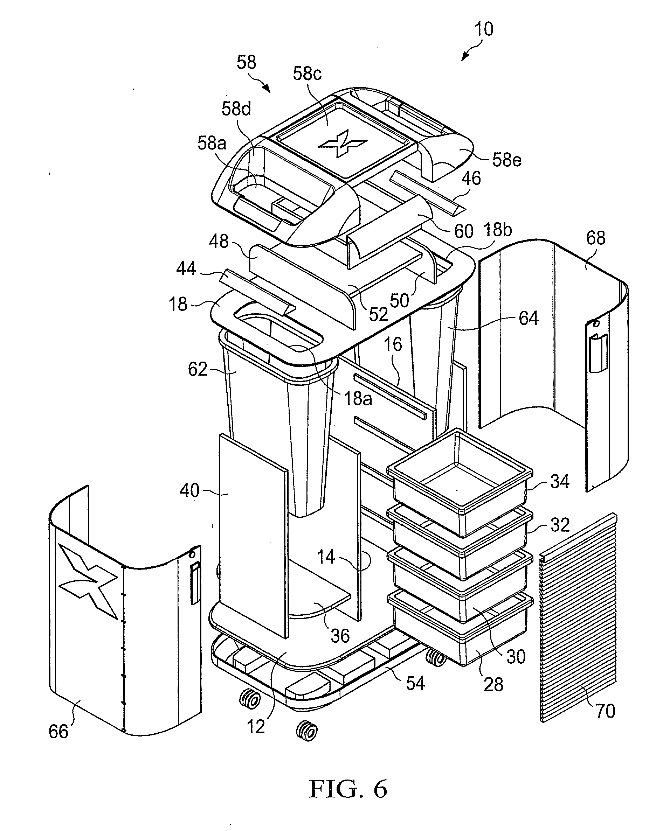

Left and right access doors, 66 and 68, are pivotally coupled to the rear end faces of the vertical panels, 14 and 16, respectively, for permitting access to the left and right bins, 62 and 64. In an exemplary embodiment, as illustrated in Figs. 5 and 6, one or both of the access doors, 66 and 68, include one or more internal hinges to permit the doors to include multiple parts that may be pivoted relative to one another. A conventional roll up door 70 is operably coupled to the vertical panels, 14 and 16, for controlling access to the drawers, 28, 30, 32, and 34.

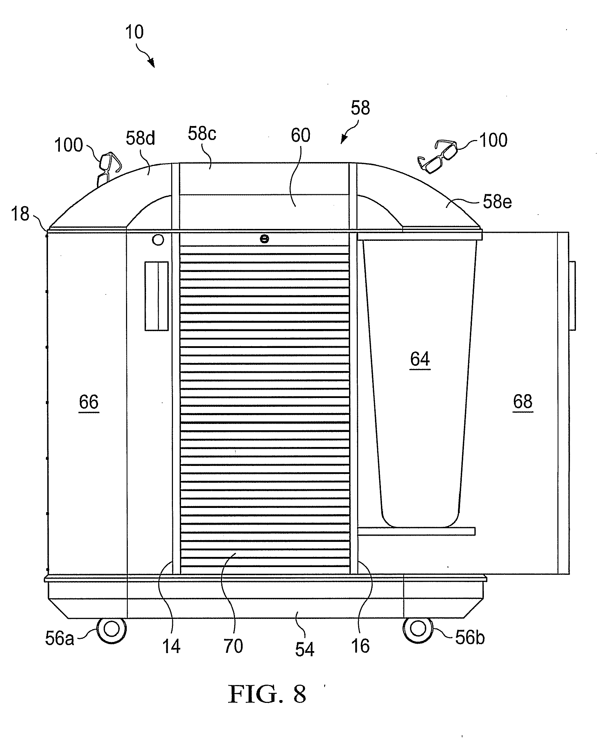

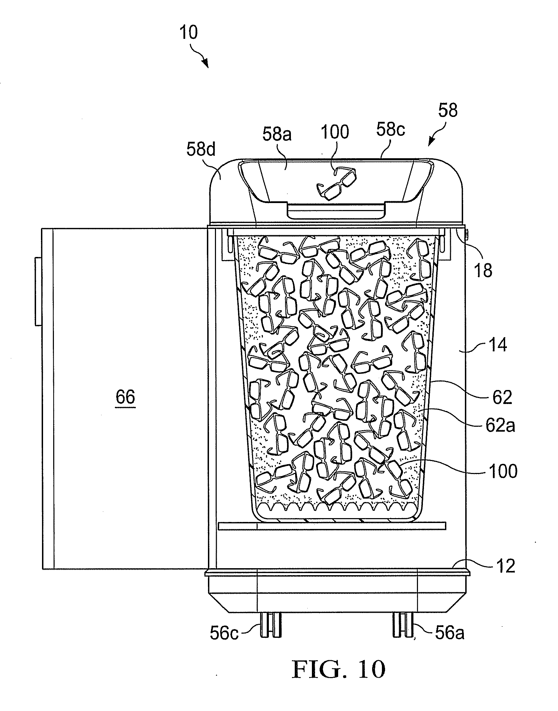

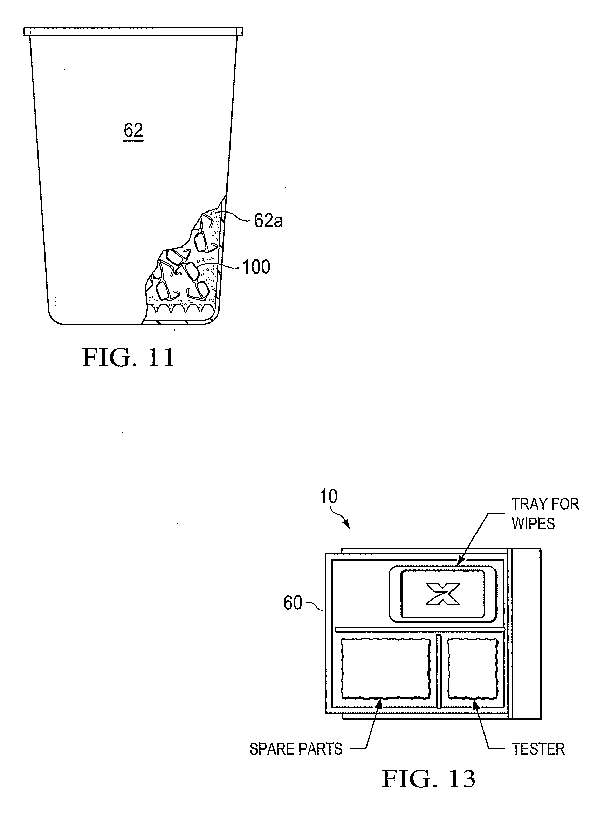

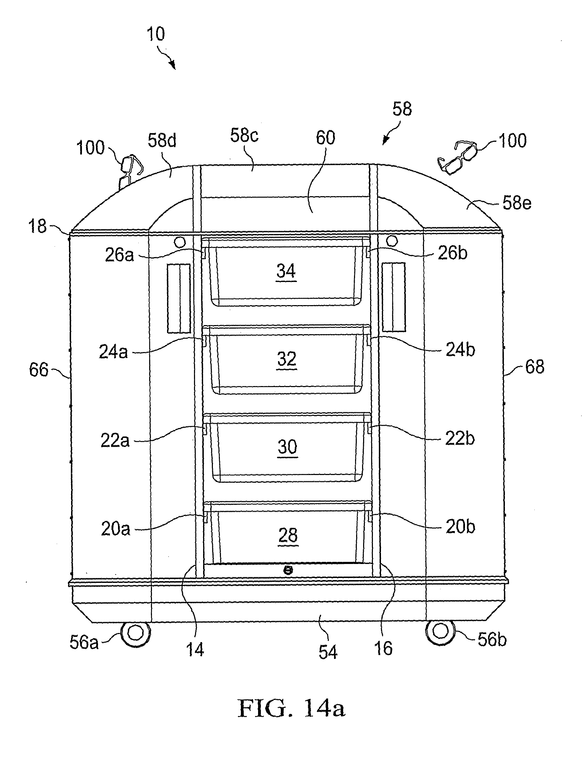

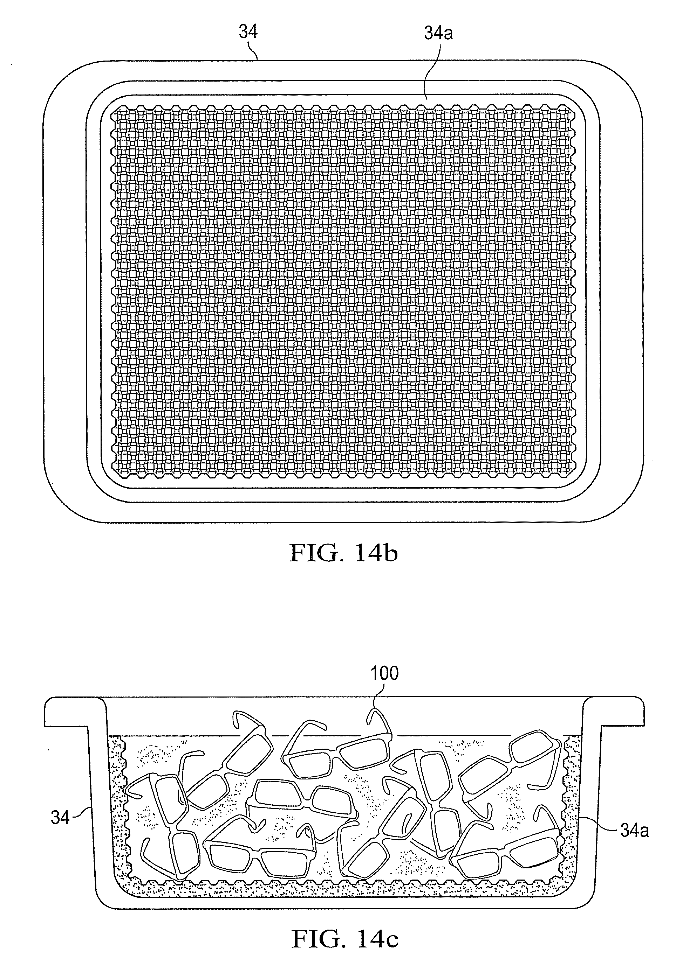

As illustrated in Fig. 8, 10 and 11, during operation of the cart 10, 3-D glasses 100 may be deposited into the left and right bins, 62 and 64, and, as illustrated in Fig. 14c, the 3-D glasses may be initially stored in the drawers 28, 30, 32, and 34. In this manner, prior to a viewing of a 3-D movie, the 3-D glasses 100 may be stored within the drawers 28, 30, 32, and 34, and then, after the view of the 3-D movie, the 3-D glasses may be deposited within the left and right bins, 62 and 64. In an exemplary embodiment, as illustrated in Figs. 10 and 11, the left and right bins, 62 and 64 include cushioning material layers, 62a and 64a, for minimizing damage to the 3-D glasses 100. In an exemplary embodiment, as illustrated in Fig. 14c, the drawers 28, 30, 32, and 34 include cushioning material layers 34a for minimizing damage to the 3-D glasses 100.

In an exemplary embodiment, the cushioning material layers, 34a, 62a and 64a comprise a conventional anti-static material in order to prevent static charges from possibly damaging the 3-D glasses 100.

A cart for 3-D glasses has been described that includes a base, a plurality of wheels operably coupled to the base, a housing coupled to the base, a plurality of drawers contained within the housing, each drawer comprising a layer of cushioning material, a plurality of bins contained within the housing, each bin comprising a layer of cushioning material, a plurality of doors pivotally coupled to the housing permitting access to the bins, each door comprising a plurality of sections pivotally coupled to one another, a roll up door operably coupled to the housing permitting access to the drawers, and a top cover coupled to the housing defining a plurality of openings permitting access to the bins, wherein the cushioning material of the drawers comprises an anti-static material; and wherein the cushioning material of the bins comprises an anti-static material.

A method of storing 3-D glasses has been described that includes providing a mobile storage device, prior to providing the 3-D glasses to viewers of a 3-D movie, storing the 3-D glasses within drawers operably coupled to the mobile storage device, wherein the drawers comprise layers of cushioning material, after the viewing of the 3-D movie; placing the 3-D glasses used to view the 3-D movie into bins operably coupled to the mobile storage device, wherein the bins comprise layers of cushioning material, permitting access to the bins using one or more doors comprising a plurality of sections pivotally coupled to one another, and permitting access to the drawers using a roll up door, wherein the cushioning material of the drawers comprises an anti-static material; and wherein the cushioning material of the bins comprises an anti-static material.

It is understood that variations may be made in the above without departing from the scope of the invention. While specific embodiments have been shown and described, modifications can be made by one skilled in the art without departing from the spirit or teaching of this invention. The embodiments as described are exemplary only and are not limiting. Many variations and modifications are possible and are within the scope of the invention. Accordingly, the scope of protection is not limited to the embodiments described, but is only limited by the claims that follow, the scope of which shall include all equivalents of the subject matter of the claims.

## Claims

1. A cart for holding 3-D glasses, comprising:
a base;
a plurality of wheels operably coupled to the base;
a housing coupled to the base;
a plurality of drawers contained within the housing, each drawer comprising a layer of cushioning material;
a plurality of bins contained within the housing, each bin comprising a layer of cushioning material;
a plurality of doors pivotally coupled to the housing permitting access to the bins, each door comprising a plurality of sections pivotally coupled to one another;
a roll up door operably coupled to the housing permitting access to the drawers; and
a top cover coupled to the housing defining a plurality of openings permitting access to the bins;
wherein the cushioning material of the drawers comprises an anti-static material; and wherein the cushioning material of the bins comprises an anti-static material.

2. The cart of claim 1, wherein the bins are positioned on opposite ends of the housing; and wherein the drawers are positioned between the bins within the housing.

3. A method of storing 3-D glasses, comprising:
providing a mobile storage device;
prior to providing the 3-D glasses to viewers of a 3-D movie, storing the 3-D glasses within drawers operably coupled to the mobile storage device, wherein the drawers comprise layers of cushioning material; and
after the viewing of the 3-D movie; placing the 3-D glasses used to view the 3-D movie into bins operably coupled to the mobile storage device, wherein the bins comprise layers of cushioning material;
permitting access to the bins using one or more doors comprising a plurality of sections pivotally coupled to one another; and
permitting access to the drawers using a roll up door;
wherein the cushioning material of the drawers comprises an anti-static material; and wherein the cushioning material of the bins comprises an anti-static material.

4. The method of claim 3, wherein the bins are positioned on opposite ends of the housing; and wherein the drawers are positioned between the bins within the housing.

5. A system for storing 3-D glasses, comprising:
means for providing a mobile storage device;
means for prior to providing the 3-D glasses to viewers of a 3-D movie, storing the 3-D glasses within drawers operably coupled to the mobile storage device, wherein the drawers comprise layers of cushioning material; and
means for after the viewing of the 3-D movie; placing the 3-D glasses used to view the 3-D movie into bins operably coupled to the mobile storage device, wherein the bins comprise layers of cushioning material;
means for permitting access to the bins using one or more doors comprising a plurality of sections pivotally coupled to one another; and
means for permitting access to the drawers using a roll up door;
wherein the cushioning material of the drawers comprises an anti-static material; and wherein the cushioning material of the bins comprises an anti-static material.

6. The system of claim 5, wherein the bins are positioned on opposite ends of the housing; and wherein the drawers are positioned between the bins within the housing.

7. A cart for holding 3-D glasses, comprising:
a base;
a plurality of wheels operably coupled to the base;
a housing coupled to the base, the housing comprising:
a plurality of spaced apart vertical supports extending from and coupled to the base;
a first horizontal support coupled to upper ends of the vertical supports that defines a pair of spaced apart openings;
a second horizontal support, spaced apart from the first horizontal support, and coupled to the upper ends of a pair of the vertical supports; and
a pair of spaced apart third horizontal supports, each third horizontal support coupled to lower ends of the vertical supports;
a plurality of drawers contained within the housing and supported between the pair of the vertical supports, each drawer comprising a layer of cushioning material;
a plurality of bins contained within the housing and each supported on a corresponding one of the third horizontal supports, each bin comprising a layer of cushioning material;
a plurality of U-shaped doors pivotally coupled to other pairs of the vertical supports of the housing permitting access to the bins, each door comprising a plurality of sections pivotally coupled to one another;
a roll up door operably coupled to the pair of vertical supports of the housing permitting access to the drawers; and
a top cover coupled to the housing including a central recessed portion and defining a plurality of spaced apart openings positioned at opposite ends of the top cover permitting access to the bins;
wherein the cushioning material of the drawers comprises an anti-static material; and wherein the cushioning material of the bins comprises an anti-static material; and
wherein the bins are positioned on opposite ends of the housing; and wherein the drawers are positioned between the bins within the housing.
